# EUROPÄISCHE PATENTSCHRIFT

(11) **EP 3 797 574 B1**
(45) Veröffentlichungstag und Bekanntmachung des Hinweises auf die Patenterteilung: **20.07.2022**
(21) Anmeldenummer: 20190895.1
(22) Anmeldetag: 13.08.2020
(51) Int. Cl.: A01D 41/12

(54) **VERTEILEINRICHTUNG FÜR HÄCKSELGUT**
DISTRIBUTING DEVICE FOR CHOPPED MATERIAL
DISPOSITIF DE DISTRIBUTION POUR PRODUITS HACHÉS

(30) Priorität: 30.09.2019 DE 102019126405
(43) Veröffentlichungstag der Anmeldung: 31.03.2021
(73) Patentinhaber: CLAAS Selbstfahrende Erntemaschinen GmbH, 33428 Harsewinkel (DE)
(72) Erfinder: Kucerin, Sergej, 32602 Vlotho (DE); Beulke, Christian, 37589 Echte (DE); Heinze, Matthias, 33609 Bielefeld (DE)
(74) Vertreter: CLAAS Gruppe

(56) Entgegenhaltungen:
- EP-A1- 1 504 651
- DE-A1-102010 003 907
- DE-A1-102010 028 599
- US-B1- 6 939 221
- US-B2- 9 107 349

## Beschreibung

Die vorliegende Erfindung betrifft eine Verteileinrichtung für Häckselgut, insbesondere für den Einsatz in einem Mähdrescher zum Verteilen von gehäckseltem Stroh auf einem Feld.

Es sind im Wesentlichen zwei Typen von Verteileinrichtungen für Häckselgut in Mähdreschern verbreitet. Beiden ist gemeinsam, dass in einer Gutförderrichtung hinter einem Häcksler mehrere in einer Breitenrichtung quer zur Gutförderrichtung beabstandete Ablenkelemente vorgesehen sind, um dem Häckselgut eine Geschwindigkeitskomponente in der Breitenrichtung auf das Häckselgut aufzuprägen, die, indem sie von Partikel zu Partikel des Häckselguts variiert, eine breitwürfige Verteilung des Häckselguts hinter dem Mähdrescher bewirkt.

Bei einem dieser beiden Typen, beschrieben z.B. in DE 10 2010 003 907 A1, sind die Ablenkelemente zwei Rotoren, die, indem sie gegensinnig rotieren, das auf sie zuströmende Häckselgut zunächst in einen Spalt zwischen den beiden Rotoren lenken und ihm anschließend eine Geschwindigkeitskomponente in der Breitenrichtung verleihen, deren Vorzeichen je nach Rotor verschieden ist und deren Betrag davon abhängt, wie lange ein Partikel nach Passieren des Spalts und bevor es von einem es befördernden Rotor abrutscht, der Drehung des Rotors zu folgen vermag. Ein Problem dieses Typs von Verteileinrichtung ist, dass sie, insbesondere bei hohem Aufkommen von Häckselgut dazu neigt, Häckselgut durchzulassen, ohne ihm eine Geschwindigkeitskomponente in der Breitenrichtung aufzuprägen, und dass dieses Häckselgut ein Band hoher Häckselgutdichte in der Mitte eines ausgestreuten Streifens von Häckselgut bildet.

Bei dem anderen Typ von Verteileinrichtung, beschrieben z.B. in DE 10 2010 028 599 A1, sind die Ablenkelemente fächerartig angeordnete Leitbleche, an denen die Häckselgutpartikel seitwärts abgelenkt werden. Die Reibungsverzögerung, denen die Partikel dabei ausgesetzt sind, ist umso größer, je stärker sie abgelenkt werden. Partikel, die an den am weitesten außen liegenden Ablenkblechen des Fächers abgelenkt worden sind, sind daher oft so stark verzögert, dass ihre Flugweite nicht größer ist als die von Partikeln, die an weiter innen liegenden Ablenkblechen weniger stark abgelenkt wurden, mit der Folge, dass Bänder hoher Häckselgutdichte insbesondere an den Rändern des ausgestreuten Streifens entstehen.

Egal ob das Häckselgut untergepflügt wird oder als Mulchschicht liegengelassen wird, ist eine gleichmäßige Verteilung unter Vermeidung dichter Bänder wünschenswert.

Um die Entstehung solcher dichter Bänder zu vermeiden oder wenigstens zu minimieren, ist gemäß der vorliegenden Erfindung vorgesehen, dass bei einer Verteileinrichtung für Häckselgut, mit einem Häcksler, einem dem Häcksler nachgeordneten Verteiler, der eine Mehrzahl von in einer Breitenrichtung quer zur mittleren Gutdurchlaufrichtung beabstandeten Ablenkelementen zum Aufprägen einer Geschwindigkeitskomponente in der Breitenrichtung auf das Häckselgut umfasst, und einem sich wenigstens zwischen dem Häcksler und dem Verteiler erstreckenden, das Häckselgut zum Verteiler leitenden Boden wenigstens ein Teil des Bodens als Stufenboden mit mehreren in der Breitenrichtung aufeinanderfolgenden Stufenbodenabschnitten ausgebildet ist, wobei die Stufenbodenabschnitte in Bezug auf eine zu der Querrichtung orthogonale Gutförderrichtung, aus der das Häckselgut an dem Stufenboden eintrifft, unterschiedlich geneigt sind.

Um eine in Breitenrichtung gleichmäßige Gutübernahme vom Häcksler zu garantieren, ist bevorzugt, dass die Stufenbodenabschnitte entlang einer gemeinsamen Linie verlaufende Vorderkanten haben. Die unterschiedlichen Neigungen zeigen sich dann daran, dass die Stufenbodenabschnitte vertikal gegeneinander versetzte Hinterkanten aufweisen.

Eine Hinterkante eines mittleren Stufenbodenabschnitts sollte jeweils höher liegen als die Hinterkanten von zwei äußeren Stufenbodenabschnitten, zwischen denen der mittlere Stufenbodenabschnitt angeordnet ist. Überraschenderweise ist dies trotz unterschiedlicher Wirkmechanismen zum Ablenken der Streugutpartikeln in der Querrichtung bei beiden erwähnten Typen von Verteileinrichtung nützlich, wie im Folgenden noch genauer erläutert wird.

Um einen in der Querrichtung breit verteilten Strom von Häckselgut zu erzeugen, umfasst der Häcksler vorzugsweise einen Rotor mit sich in der Breitenrichtung erstreckender Rotorachse.

Der Stufenboden erstreckt sich vorzugsweise über die gesamte Arbeitsbreite der Verteileinrichtung, um den gesamten Strom des Häckselguts zu erfassen und zu lenken.

Um die Wirkung des Stufenbodens jeweils in Abhängigkeit von der Art des gehäckselten Materials optimieren zu können, sollte die Neigung wenigstens eines der Stufenbodenabschnitte relativ zu einem anderen verstellbar sein.

Darüber hinaus kann es nützlich sein, wenn die Neigung des gesamten Stufenbodens verstellbar ist.

Stellglieder zum Antreiben der Verstellung können jeweils dem einen Stufenbodenabschnitt und/oder dem gesamten Stufenboden zugeordnet sein; insbesondere können sie an eine Benutzerschnittstelle in einer Fahrerkabine des Mähdreschers angeschlossen sein, um eine Anpassung der Neigung von der Fahrerkabine aus zu ermöglichen.

Gemäß einer ersten Ausgestaltung der Erfindung sind die Ablenkelemente zwei Rotoren.

Die Rotoren sollten gegensinnig so drehangetrieben sein, dass dem Häcksler zugewandte Umfangsbereiche der Rotoren sich aufeinander zu bewegen.

Die relativ zu benachbarten Hinterkanten erhöhte Hinterkante eines mittleren Stufenbodenabschnitts bewirkt hier, das Häckselgut, das diese erhöhte Hinterkante passiert, auf einen oberen Bereich der Rotoren trifft und von diesem mitgenommen wird, wohingegen Häckselgut, das niedrigere Hinterkanten passiert, auf einen unteren Bereich der Rotoren trifft. Indem somit das Häckselgut über die Höhe der Rotoren gleichmäßig verteilt wird, wird verhindert, dass es beim Durchgang durch den Spalt übermäßig komprimiert wird und deshalb hinter dem Spalt sofort wieder von den Rotoren abgleitet, bevor es eine Geschwindigkeitskomponente in der Querrichtung hat erwerben können. So kann vermieden werden, dass nicht in Querrichtung abgelenktes Häckselgut als dichtes Band hinter dem Mähdrescher abgelegt wird.

Überraschenderweise erweist sich der Stufenboden mit unterschiedlich geneigten Anschnitten auch als wirksam, um die Verteilung des Häckselguts aus einer Verteileinrichtung zu vergleichmäßigen, deren Ablenkelemente Leitbleche sind.

Wenn die Leitbleche unter einer Deckplatte montiert sind und der Stufenboden orientiert oder orientierbar ist, um Häckselgut von unten gegen die Deckplatte zu werfen, könnte die Vergleichmäßigung in der Verteilung des Häckselgut damit zusammenhängen, dass Häckselgut, das von unten unter einem relativ steilen Winkel auf die Deckplatte trifft, von dieser stärker verzögert wird als solches, das unter einem flacheren Winkel gegen die Deckplatte trifft oder diese eventuell gar nicht erreicht. Häckselgut, das zwischen schwach gekrümmten und dementsprechend wenig verzögernden Leitblechen durchläuft, kann daher durch Reibung an der Deckplatte in ähnlichem Maße verzögert werden wie an stark gekrümmten Leitblechen abgelenktes Häckselgut, das mit der Deckplatte wenig oder gar nicht wechselwirkt. Daher ist bei der erfindungsgemäßen Verteilervorrichtung die Geschwindigkeit von stark zur Seite abgelenktem Häckselgut im Verhältnis zur Geschwindigkeit von nicht oder gering abgelenktem Häckselgut hoch. Dadurch wird eine große Wurfweite auch des stark abgelenkten Häckselguts erreicht und die Ablagerung eines an den Rändern verdichteten Streifens von Häckselgut vermieden.

Um das Häckselgut durch die Verteileinrichtung zu fördern, sollte dem Häcksler und den Leitblechen ein Gebläse zugeordnet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig.1: eine teilgeschnittene Seitenansicht des Heckbereichs eines Mähdreschers mit einer Verteileinrichtung für Häckselgut gemäß einer ersten Ausgestaltung der Erfindung;
- Fig. 2: eine Draufsicht auf die Verteileinrichtung der Fig. 1;
- Fig. 3: eine perspektivische Ansicht eines Stufenbodens der Verteileinrichtung;
- Fig. 4: einen Schnitt durch eine Verteileinrichtung gemäß einer zweiten Ausgestaltung der Erfindung; und
- Fig. 5: eine Ansicht von unten eines Stufenbodens und von Leitblechen gemäß der zweiten Ausgestaltung.

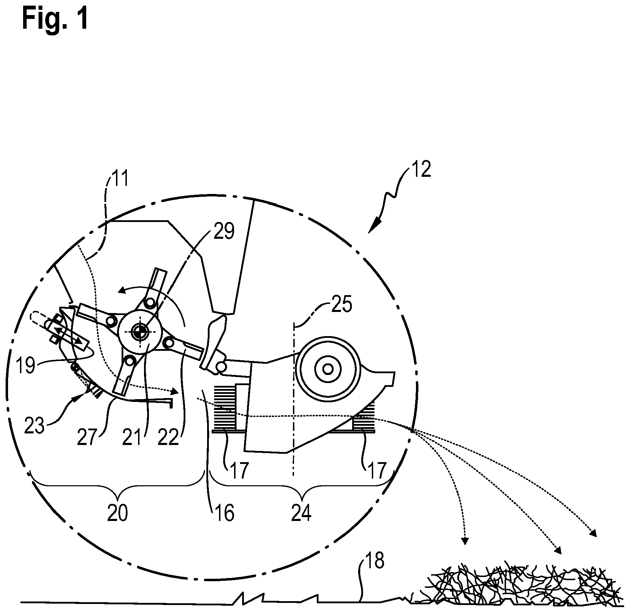

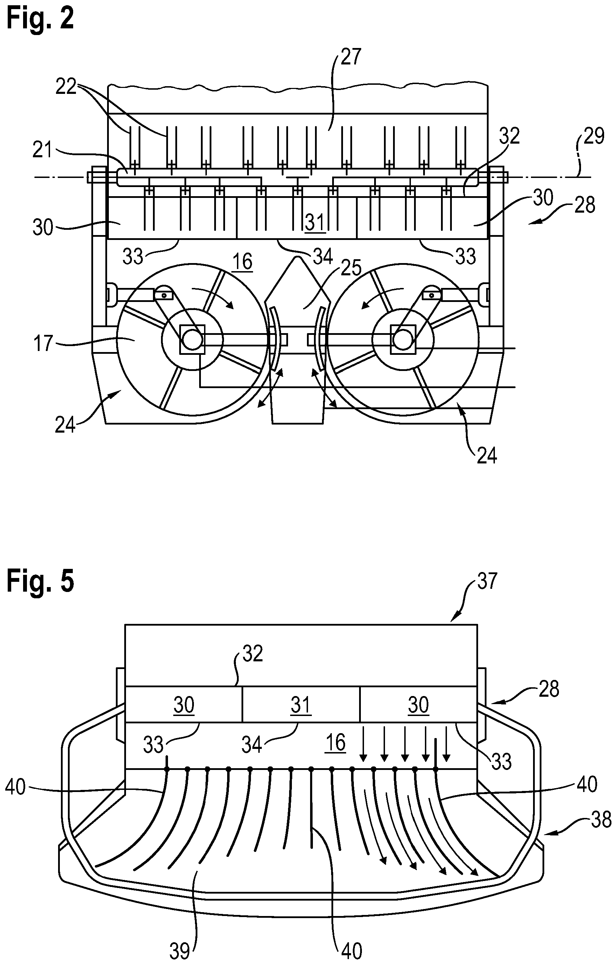

Fig. 1 und 2 zeigen im Schnitt entlang einer vertikal und in Karosserielängsrichtung verlaufenden Schnittebene sowie in Draufsicht eine erfindungsgemäße Verteileinrichtung 12 am Heck eines Mähdreschers, die vorgesehen ist, um in dem Mähdrescher ausgedroschenes Stroh 11 auf dem gleichzeitig von dem Mähdrescher abgeernteten Feld 18 zu verteilen.

Den Eingang der Verteileinrichtung 12 bildet ein Häcksler 20. Der Häcksler 20 umfasst einen um eine horizontal in Querrichtung des Mähdreschers orientierte Achse 29 (s. Fig. 2) drehantreibbaren Rotor 21 mit pendelnd aufgehängten Messern 22, ein Gehäuse 23, das den Rotor 21 auf einem Teil seines Umfangs umgibt (siehe Fig. 1), sowie am Gehäuse 23 feste Messer 19. Durch die Drehung des Rotors 21, im Gegenuhrzeigersinn in der Darstellung der Fig. 1, wird das Stroh 11 einerseits im Zusammenwirken der rotierenden Messer 22 mit den gehäusefesten Messern 19 zerkleinert und andererseits entgegen der Fahrtrichtung des Mähdreschers 1 zwei Wurfrotoren 24 zugeführt.

Die Wurfrotoren 24 sind spiegelbildlich zueinander auf verschiedenen Seiten einer Symmetrieebene der Verteileinrichtung 12 angeordnet, die auf der Drehachse 29 des Rotors 21 senkrecht steht. Ihre Drehachsen 25 (s. Fig. 1) sind vertikal oder aus der Vertikalen leicht in eine nach hinten ansteigende Orientierung gekippt.

Die Wurfrotoren 24 haben jeweils einen Kern, von dem Mitnehmer 17 in Form von Dornen, Paddeln oder dergleichen radial abstehen.

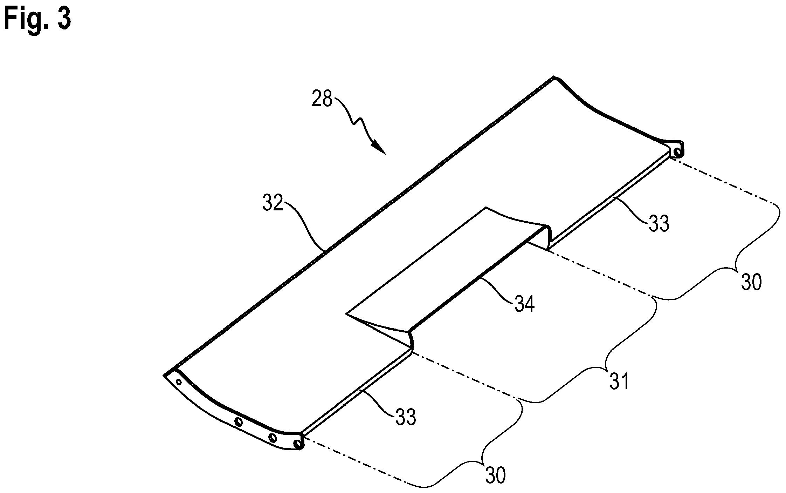

Ein vor den Wurfrotoren 24, d.h. bezogen auf die Durchlaufrichtung des Strohs 11 durch den Häcksler 20 stromaufwärts von diesen, angeordneter Boden des Gehäuses 23 umfasst einen sich kreisbogenförmig um den Rotor 21 des Häckslers 20 erstreckenden Abschnitt 27 und, zwischen diesem und den Wurfrotoren 24, einen Stufenboden 28, der in Fig. 3 in einer perspektivischen Ansicht gezeigt ist. Der Stufenboden 28 umfasst mehrere in Richtung der Achse 29 des Rotors 21 aufeinanderfolgende Abschnitte 30, 31. Die Abmessung des Stufenbodens 28 in Richtung der Drehachse 29 des Rotors 21 entspricht der Länge des Rotors 21. Der Durchmesser der Wurfrotoren 24 ist so bemessen, dass die Abschnitte 30 jeweils einem Teil des Umfangs eines Wurfrotors 24 gegenüberliegen und der Abschnitt 31 einem Engpass 35 zwischen den Wurfrotoren 24 sowie jeweils einem an den Engpass 35 angrenzenden Teil von beiden Wurfrotoren 24. Im gezeigten Beispiel ist der Durchmesser der Wurfrotoren 24 geringfügig kleiner als die halbe Länge des Rotors 21. Durch die Drehung des Rotors 21 wird das Häckselgut auf dem Abschnitt 27 in zu dessen Oberfläche tangentialer, zur Achse 29 orthogonaler Richtung gefördert.

Die Abschnitte 30, 31 sind entlang einer gemeinsamen geraden Vorderkante 32 mit dem Abschnitt 27 verbunden, sind aber unterschiedlich geneigt, so dass Hinterkanten 33 der äußeren Abschnitte 30 tiefer liegen als die Hinterkante 34 des mittleren Abschnitts 31. In der Darstellung der Fig. 1 liegen die Hinterkanten 33 etwa auf halber Höhe der Wurfrotoren 24, so dass - nach Überbrückung eines Zwischenraums 16 zwischen den Hinterkanten 33, 34 und den Wurfrotoren 24 - Häckselgut, das vom Häcksler 20 über die äußeren Stufenbodenabschnitte 30 zu den Wurfrotoren 24 vorrückt, in deren unteren Teil eindringt und von den in Pfeilrichtung gegensinnig rotierenden Wurfrotoren 24 in Richtung eines Engpasses 35 zwischen ihnen mitgenommen wird. Häckselgut, das über den mittleren Abschnitt 31 vorrückt, erreicht die Wurfrotoren 24 weiter oben und kann sich daher über das bereits darin befindliche, über die äußeren Stufenbodenabschnitte 30 zugeführte Häckselgut schieben. So wird die verfügbare Höhe der Wurfrotoren 24 voll ausgenutzt, und die Stauchung des Häckselguts in den Wurfrotoren 24 wird minimiert. Dementsprechend wird das Häckselgut nach Passieren des Engpasses 35 im Wesentlichen nur durch Fliehkraftwirkung aus den Wurfrotoren 24 ausgetrieben und dementsprechend breitwürfig hinter dem Mähdrescher verteilt.

Die Verbindung zwischen dem vorderen Abschnitt 27 des Gehäuses und dem Stufenboden 28 kann starr sein, vorzugsweise ist sie um die Vorderkante 32 gelenkig. In letzterem Falle kann an jedem Abschnitt 30, 31 ein (nicht gezeigtes) Stellglied vorgesehen sein, durch das die Neigung des betreffenden Abschnitts 30, 31, vorzugsweise von einer Bedienerschnittstelle in einer Fahrerkabine aus, steuerbar ist, so dass nicht nur die Neigung des Stufenbodens 28 als Ganzes einstellbar ist, sondern auch der Unterschied zwischen den Neigungen der äußeren Abschnitte 30 und des mittleren Abschnitts 31.

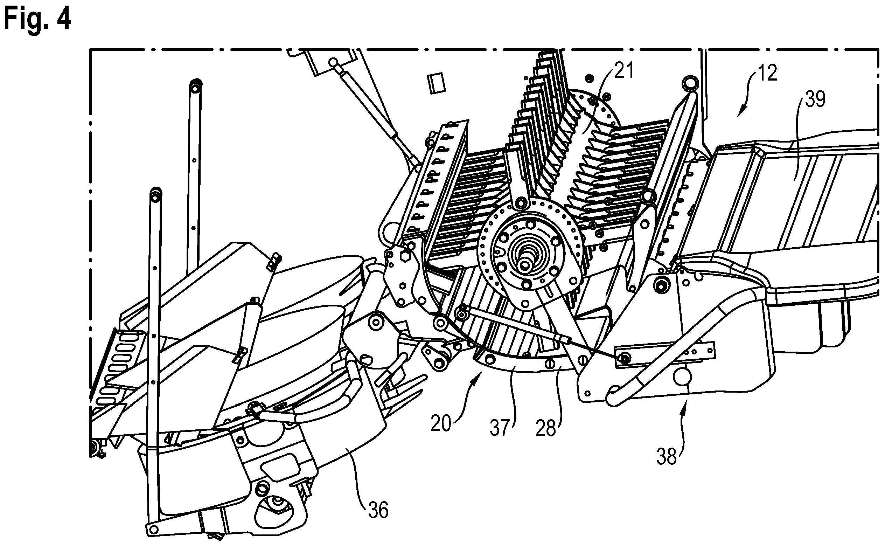

Fig. 4 und 5 zeigen eine zweite Ausgestaltung der Verteileinrichtung 12 im Schnitt sowie in einer Ansicht von unten. Ein Häcksler 20 und dessen Rotor 21 sowie das den Rotor 21 umgebende Gehäuse sind im Wesentlichen identisch mit denen der ersten Ausgestaltung. Ein Boden 37 der Verteileinrichtung 12 erstreckt sich in gleichbleibender Breite unter dem Häckslerrotor 21 her zum Heck des Mähdreschers und ist in einem hinteren Bereich als Stufenboden 28 mit gleicher Geometrie wie in Fig. 3 gezeigt ausgebildet: äußere und mittlere Abschnitte 30, 31 sind entlang einer gemeinsamen den Vorderkante an den vorderen Teil des Bodens 37 angelenkt, und der mittlere Abschnitt 31 verläuft nach hinten stärker ansteigend als die äußeren Abschnitte 30. Dadurch wird das durchlaufende Häckselgut vom mittleren Abschnitt 31 unter einem steileren Winkel von unten gegen eine Deckplatte 39 eines den Ausgang der Verteileinrichtung bildenden Streublechverteilers 38 gelenkt als von den äußeren Abschnitten 30. Ein vor dem Häcksler 12 angeordnetes Gebläse 36 erzeugt einen Luftstrom, der das Häckselgut durch den Streublechverteiler 38 hindurch spült.

Fig. 5 zeigt eine Ansicht des Stufenbodens 28 und des Streublechverteilers 38 von unten. Man erkennt hier, dass hinter dem mittleren Stufenbodenabschnitt 31 kürzere und schwächer gekrümmte Leitbleche 40 von der Deckplatte 39 herabhängen als hinter den äußeren Abschnitten 30. Häckselgut, das den mittleren Stufenbodenabschnitt 31 passiert, wird zwar nur schwach an den Leitblechen 39 abgelenkt und verzögert, dafür wird seine Wurfweite aber durch Verzögerung und Ablenkung nach unten an der Deckplatte 39 begrenzt. Häckselgut, das die äußeren Abschnitte 31 passiert, wird hingegen an der Deckplatte 39 allenfalls geringfügig abgelenkt und verlässt daher den Streublechverteiler 38 mit einer Bahnneigung und einer Geschwindigkeit, die es selbst den an den äußersten Leitblechen 40 am stärksten abgelenkten Partikel noch erlaubt, in seitlicher Richtung weiter zu fliegen als schwächer abgelenkte Partikel, so das eine über die gesamte Breite des hinter dem Mähdrescher ausgestreuten Streifens gleichmäßige Verteilung des Häckselguts erreicht werden kann.

### Bezugszeichen

- 12: Verteileinrichtung
- 16: Zwischenraum
- 17: Mitnehmer
- 18: Feld
- 19: Messer
- 20: Häcksler
- 21: Rotor
- 22: Messer
- 23: Gehäuse
- 24: Wurfrotor
- 25: Drehachse
- 26: Umfangsfläche
- 27: Abschnitt (des Bodens)
- 28: Stufenboden
- 29: Achse
- 30: (äußerer) Stufenbodenabschnitt
- 31: (mittlerer) Stufenbodenabschnitt
- 32: Vorderkante
- 33: Hinterkante
- 34: Hinterkante
- 35: Engpass
- 36: Gebläse
- 37: Boden
- 38: Streublechverteiler
- 39: Deckplatte
- 40: Leitblech

## Patentansprüche

1. Verteileinrichtung (12) für Häckselgut, mit einem Häcksler (20), einem dem Häcksler (20) nachgeordneten Verteiler, der eine Mehrzahl von in einer Breitenrichtung beabstandeten Ablenkelementen (24, 40) zum Aufprägen einer Geschwindigkeitskomponente in der Breitenrichtung auf das Häckselgut umfasst, und einem sich wenigstens zwischen dem Häcksler (20) und dem Verteiler erstreckenden, das Häckselgut zum Verteiler leitenden Boden (37), **dadurch gekennzeichnet, dass** wenigstens ein Teil des Bodens (37) als Stufenboden (28) mit mehreren in der Breitenrichtung aufeinanderfolgenden Stufenbodenabschnitten (30, 31, 30) ausgebildet ist, wobei die Stufenbodenabschnitte (30, 31, 30) in Bezug auf eine zu der Querrichtung orthogonalen Gutförderrichtung, aus der das Häckselgut an dem Stufenboden eintrifft, unterschiedlich geneigt sind.

2. Verteileinrichtung nach Anspruch 1, **dadurch gekennzeichnet, dass** die Stufenbodenabschnitte (30, 31, 30) entlang einer gemeinsamen Linie verlaufende Vorderkanten (32) und vertikal gegeneinander versetzte Hinterkanten (33, 34) aufweisen.

3. Verteileinrichtung nach Anspruch 1 oder 2, **dadurch gekennzeichnet, dass** eine Hinterkante (34) eines mittleren Stufenbodenabschnitts (31) höher liegt als die Hinterkanten (33) von zwei äußeren Stufenbodenabschnitten (30), zwischen denen der mittlere Stufenbodenabschnitt (31) angeordnet ist.

4. Verteileinrichtung nach einem der vorhergehenden Ansprüche, **dadurch gekennzeichnet, dass** der Häcksler (20) einen Rotor (21) mit sich in der Breitenrichtung erstreckender Rotorachse (29) aufweist.

5. Verteileinrichtung nach einem der vorhergehenden Ansprüche, **dadurch gekennzeichnet, dass** der Stufenboden (28) sich über die gesamte Breite der Verteileinrichtung (12) erstreckt.

6. Verteileinrichtung nach einem der vorhergehenden Ansprüche, **dadurch gekennzeichnet, dass** die Neigung wenigstens eines der Stufenbodenabschnitte (30, 31) relativ zu einem anderen Stufenbodenabschnitt (31, 30) verstellbar ist.

7. Verteileinrichtung nach einem der vorhergehenden Ansprüche, **dadurch gekennzeichnet, dass** die Neigung des gesamten Stufenbodens (28) verstellbar ist.

8. Verteileinrichtung nach einem der vorhergehenden Ansprüche, **dadurch gekennzeichnet, dass** die Ablenkelemente zwei Wurfrotoren (24) sind.

9. Verteileinrichtung nach Anspruch 8, **dadurch gekennzeichnet, dass** die Wurfrotoren (24) gegensinnig so drehangetrieben sind, dass dem Häcksler (20) zugewandte Umfangsbereiche der Wurfrotoren (24) sich aufeinander zu bewegen.

10. Verteileinrichtung nach Anspruch 9, **dadurch gekennzeichnet, dass** eine Hinterkante (34) eines einem Engpass (35) zwischen den Wurfrotoren (24) zugewandten mittleren Stufenbodenabschnitts (31) höher liegt als Hinterkanten (33) von zwei äußeren Stufenbodenabschnitten (30).

11. Verteileinrichtung nach einem der Ansprüche 1 bis 6, **dadurch gekennzeichnet, dass** die Ablenkelemente Leitbleche (40) sind.

12. Verteileinrichtung nach Anspruch 11, **dadurch gekennzeichnet, dass** die Leitbleche (40) unter einer Deckplatte (39) montiert sind und der Stufenboden (28) orientiert oder orientierbar ist, um Häckselgut von unten gegen die Deckplatte (39) zu werfen.

13. Verteileinrichtung nach Anspruch 11 oder 12, **dadurch gekennzeichnet, dass** dem Häcksler (20) und dem Verteiler (38) ein Gebläse (36) zugeordnet ist.

14. Verteileinrichtung nach Anspruch 11, 12 oder 13, **dadurch gekennzeichnet, dass** ein mittleres Leitblech (40) kleinere Abmessungen und/oder eine kleinere Krümmung und/oder einen kleineren Winkel relativ zur Gutförderrichtung aufweist als zwei äußere Leitbleche (40), zwischen denen das mittlere Leitblech (40) angeordnet ist.

## Claims

1. A distributing device (12) for chopped material, with a chopper (20), a distributor downstream of the chopper (20) and which comprises a plurality of deflector elements (24, 40) spaced apart in a width direction in order to impart a component of velocity in the width direction upon the chopped material, and a pan (37) which extends at least between the chopper (20) and the distributor and which guides the chopped material to the distributor, **characterized in that** at least a portion of the pan (37) is configured as a stepped pan (28) with a plurality of stepped pan sections (30, 31, 30) one after the other in the width direction, wherein the stepped pan sections (30, 31, 30) have different inclinations with respect to a material conveying direction which is orthogonal to the transverse direction, and from which the chopped material arrives at the stepped pan.

2. The distributing device according to claim 1, **characterized in that** the stepped pan sections (30, 31, 30) have front edges (32) and vertically offset back edges (33, 34) which run along a common line.

3. The distributing device according to claim 1 or claim 2, **characterized in that** a back edge (34) of a central stepped pan section (31) is higher than the back edges (33) of two outer stepped pan sections (30) between which the central stepped pan section (31) is disposed.

4. The distributing device according to one of the preceding claims, **characterized in that** the chopper (20) has a rotor (21) with a rotor axis (29) which extends in the width direction.

5. The distributing device according to one of the preceding claims, **characterized in that** the stepped pan (28) extends over the entire width of the distributing device (12).

6. The distributing device according to one of the preceding claims, **characterized in that** the inclination of at least one of the stepped pan sections (30, 31) can be adjusted relative to another stepped pan section (31, 30).

7. The distributing device according to one of the preceding claims, **characterized in that** the inclination of the entire stepped pan (28) can be adjusted.

8. The distributing device according to one of the preceding claims, **characterized in that** the deflector elements are two discharge rotors (24).

9. The distributing device according to claim 8, **characterized in that** the discharge rotors (24) are driven in rotation in opposite directions such that regions of the circumference of the discharge rotors (24) which face the chopper (20) move towards one another.

10. The distributing device according to claim 9, **characterized in that** a back edge (34) of a central stepped pan section (31) which faces a nip (35) between the discharge rotors (24) is higher than back edges (33) of two outer stepped pan sections (30).

11. The distributing device according to one of claims 1 to 6, **characterized in that** the deflector elements are guide plates (40).

12. The distributing device according to claim 11, **characterized in that** the guide plates (40) are mounted under a cover plate (39) and the stepped pan (28) is orientated or can be orientated in order to throw chopped material against the cover plate (39) from below.

13. The distributing device according to claim 11 or claim 12, **characterized in that** a fan is associated with the chopper (20) and the distributor (38).

14. The distributing device according to claim 11, claim 12 or claim 13, **characterized in that** a central guide plate (40) has smaller dimensions and/or a smaller curvature and/or a smaller angle relative to the material conveying direction than two outer guide plates (40) between which the central guide plate (40) is disposed.

## Revendications

1. Dispositif de distribution (12) pour des produits hachés, avec une hacheuse (20), un distributeur disposé en aval de la hacheuse (20), qui comprend une multitude d'éléments de déviation (24, 40) tenus à distance dans un sens de la largeur pour imprimer une composante de vitesse dans le sens de la largeur sur les produits hachés, et un fond (37) s'étendant au moins entre la hacheuse (20) et le distributeur, acheminant les produits hachés vers le distributeur, **caractérisé en ce qu'**au moins une partie du fond (37) est réalisé en tant que fond étagé (28) avec plusieurs sections de fond étagé (30, 31, 30) se suivant les unes les autres dans le sens de la largeur, dans lequel les sections de fond étagé (30, 31, 30) sont inclinées différemment par rapport à un sens de transport d'articles orthogonal par rapport à la direction transversale, depuis laquelle les produits hachés arrivent sur le fond étagé.

2. Dispositif de distribution selon la revendication 1, **caractérisé en ce que** les sections de fond étagé (30, 31, 30) présentent des bords avant (32) s'étendant le long d'une ligne commune et des bords arrière (33, 34) décalés verticalement les uns à l'encontre des autres.

3. Dispositif de distribution selon la revendication 1 ou 2, **caractérisé en ce qu'**un bord arrière (34) d'une section de fond étagé (31) centrale est plus haut que les bords arrière (33) de deux sections de fond étagé extérieures (30), entre lesquelles la section de fond étagé centrale (31) est disposée.

4. Dispositif de distribution selon l'une quelconque des revendications précédentes, **caractérisé en ce que** la hacheuse (20) présente un rotor (21) avec un axe de rotor (29) s'étendant dans le sens de la largeur.

5. Dispositif de distribution selon l'une quelconque des revendications précédentes, **caractérisé en ce que** le fond étagé (28) s'étend sur la totalité de la largeur du dispositif de distribution (12).

6. Dispositif de distribution selon l'une quelconque des revendications précédentes, **caractérisé en ce que** l'inclinaison d'au moins une des sections de fond étagé (30, 31) peut être ajustée par rapport à une autre section de fond étagé (31, 30).

7. Dispositif de distribution selon l'une quelconque des revendications précédentes, **caractérisé en ce que** l'inclinaison de la totalité du fond étagé (28) peut être ajustée.

8. Dispositif de distribution selon l'une quelconque des revendications précédentes, **caractérisé en ce que** les éléments de déviation sont deux rotors d'éjection (24).

9. Dispositif de distribution selon la revendication 8, **caractérisé en ce que** les rotors d'éjection (24) sont entraînés en rotation en sens inverse de telle sorte que des zones périphériques, tournées vers la hacheuse (20), des rotors d'éjection (24) se déplacent les unes vers les autres.

10. Dispositif de distribution selon la revendication 9, **caractérisé en ce qu'**un bord arrière (34) d'une section de fond étagé centrale (31) tournée vers un étranglement (35) entre les rotors d'éjection (24) est plus haut que des bords arrière (33) de deux sections de fond étagé extérieures (30).

11. Dispositif de distribution selon l'une quelconque des revendications 1 à 6, **caractérisé en ce que** les éléments de déviation sont des tôles directrices (40).

12. Dispositif de distribution selon la revendication 11, **caractérisé en ce que** les tôles directrices (40) sont montées sous une plaque de recouvrement (39) et le fond étagé (28) est orienté ou peut être orienté pour éjecter des produits hachés depuis le bas contre la plaque de recouvrement (39).

13. Dispositif de distribution selon la revendication 11 ou 12, **caractérisé en ce qu'**une soufflante (36) est associée à la hacheuse (20) et au distributeur (38).

14. Dispositif de distribution selon la revendication 11, 12 ou 13, **caractérisé en ce qu'**une tôle directrice (40) centrale présente des dimensions plus petites et/ou une incurvation plus petite et/ou un angle plus petit par rapport à la direction de transport des produits que deux tôles directrices (40) extérieures, entre lesquelles la tôle directrice (40) centrale est disposée.
